# EUROPÄISCHE PATENTSCHRIFT

(11) **EP 1 945 494 B1**
(45) Veröffentlichungstag und Bekanntmachung des Hinweises auf die Patenterteilung: **12.08.2009**
(21) Anmeldenummer: 06793631.0
(22) Anmeldetag: 19.09.2006
(51) Int. Cl.: B62D 15/02

(54) **LKS-SPURHALTSYSTEM MIT MODIFIZIERTER REGELCHARAKTERISTIK BEI KURVENFAHRT**
LANE KEEPING STEERING CONTROL SYSTEM WITH A MODIFIED CONTROL CHARACTERISTIC WHEN TURNING
SYSTEME DE MAINTIEN SUR VOIE LKS DOTE D'UNE CARACTERISTIQUE MODIFIEE DE REGULATION DANS LES VIRAGES

(30) Priorität: 31.10.2005 DE 102005052034
(43) Veröffentlichungstag der Anmeldung: 23.07.2008
(73) Patentinhaber: ROBERT BOSCH GMBH, 70442 Stuttgart (DE)
(72) Erfinder: SCHERL, Michael, 74321 Bietigheim (DE); WEILKES, Michael, 74343 Sachsenheim (DE); BUERKLE, Lutz, 71229 Leonberg (DE); RENTSCHLER, Tobias, 75180 Pforzheim (DE)
(86) Internationale Anmeldenummer: PCT/EP2006/066495
(87) Internationale Veröffentlichungsnummer: WO 2007/051671

(56) Entgegenhaltungen:
- EP-A- 1 547 887
- EP-A2- 1 348 610
- WO-A-03/091813

## Beschreibung

Die Erfindung betrifft eine Vorrichtung zum Halten eines Fahrzeuges in seiner Fahrspur gemäß dem Oberbegriff des Patentanspruches 1.

Aus dem Stand der Technik sind verschiedene Systeme bekannt, die den Fahrer eines Kfz darin unterstützen, das Fahrzeug in seiner Fahrspur zu halten. Hierzu üben solche Systeme gerichtete Lenkkräfte auf die Lenkung des Fahrzeuges aus, wenn das Fahrzeug eine vorgegebene Bewegungsbahn verlässt. Diese Systeme werden auch als LKS-Systeme (LKS: Lane Keeping Support) bezeichnet. Der Grad der Automatisierung reicht dabei von Systemen, die den Fahrer durch Aufbringen künstlicher Lenkkräfte darauf hinweisen, wie er die Lenkung betätigen müsste, um das Fahrzeug in seiner Fahrspur zu halten, bis hin zu LKS-Systemen, die das Fahrzeug vollautomatisch in seiner Fahrspur führen.

LKS-Systeme, wie sie z.B. aus der DE 101 14 470 A1 bekannt sind, umfassen im Wesentlichen ein Fahrspur-Erkennungssystem, wie z.B. ein Videosystem, mit dem der Fahrspurverlauf vor dem Fahrzeug und die relative Position des Fahrzeuges (die so genannte Ablage und Orientierung) in der Fahrspur bestimmt werden können. Wenn die Bewegungsbahn des Fahrzeuges von einer vorgegebenen Bewegungsbahn zu stark abweicht, variiert das System das auf die Lenkung ausgeübte Unterstützungsmoment und erzeugt dadurch künstliche Lenkkräfte. Diese sind so stark, dass sie vom Fahrer haptisch erfasst werden können und so gerichtet, dass der Fahrer den Lenkradeinschlag in Richtung der Soll-Bewegungsbahn ändert. Bei einem zu geringen Lenkradeinschlag spürt der Fahrer beispielsweise ein zusätzliches Moment in Richtung der Kurveninnenseite. Bei einem zu starken Lenkradeinschlag spürt er dagegen ein zusätzliches Moment in Richtung der Kurvenaußenseite.

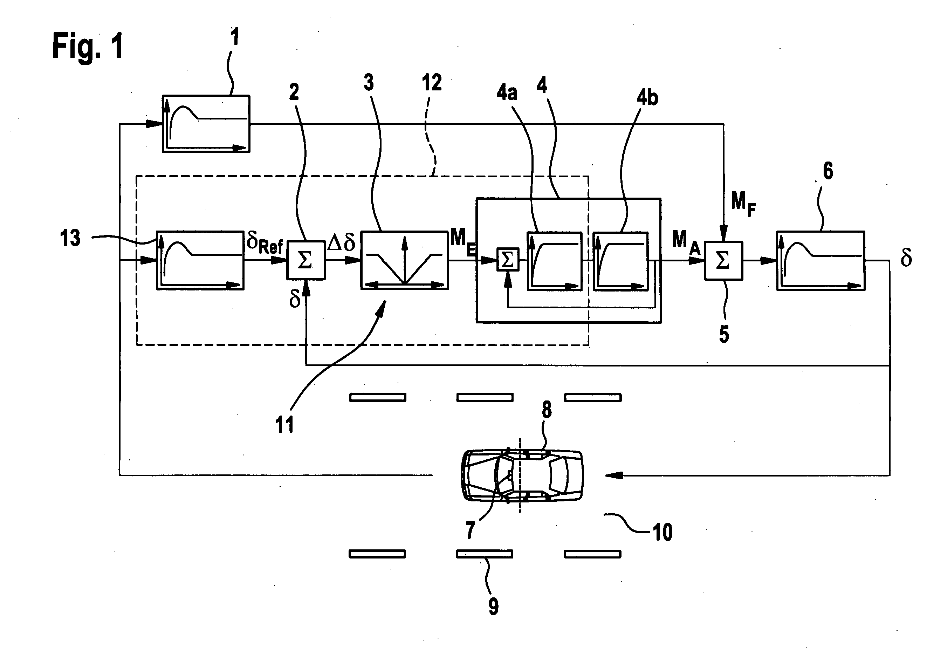

In Fig. 1 wird ein Lenksystem mit LKS-Funktion betrachtet, das in der Lage ist, ein Fahrzeug 8 vollautomatisch in seiner Fahrspur 10 zu halten. Das Gesamtsystem umfasst eine am Fahrzeug 8 angeordnete Sensorik 7 zur Fahrspurerkennung, wie z.B. ein Videosystem, mittels der die Ablage und Orientierung des Fahrzeuges 8 bezüglich seiner Fahrspur 10 (laterale Ablage, Bahndifferenzwinkel), sowie der Fahrspurverlauf (Krümmung, Krümmungsänderung) vor dem Fahrzeug ermittelt werden können. Das Fahrspurerkennungssystem 7 umfasst hier eine Videokamera und eine spezielle Bildverarbeitungssoftware, die aus den Bilddaten die gewünschten geometrischen Daten ermittelt.

Die geometrischen Daten als auch weitere Fahr-Zustandsgrößen, wie z.B. die Fahrgeschwindigkeit, werden einem mathematischen Referenzmodell 13 zugeführt, das daraus einen Referenz-Lenkwinkel δ_{Ref} berechnet. Dieser Referenzlenkwinkel δ_{Ref} ist derjenige Lenkwinkel, der an der Lenkung eingeschlagen werden müsste, um das Fahrzeug 8 optimal in seiner Fahrspur 10 zu halten. Dieser Wert δ_{Ref} fließt in einen nachgeordneten Regelkreis 11, der dazu dient, den tatsächlichen Lenkwinkel δ auf den vorgegebenen Sollwert δ_{Ref} zu regeln und somit das Fahrzeug 8 in seiner Spur 10 (üblicherweise in der Spurmitte) zu halten.

Der Regelkreis 11 umfasst einen Knoten 2 (Addierknoten), an dem eine Regeldifferenz Δδ = δ_{Ref} - δ der Regelgröße berechnet wird, ein Übertragungsglied 3, das den Regler des Regelkreises 11 bildet, sowie einen Lenksteller 4 mit einem Momentenregelkreis, der das Stellglied des Lenkwinkel-Regelkreises 11 bildet. Die Elemente 2, 3, 4a und das Referenzmodell 13 sind üblicherweise als Softwaremodule in einem Steuergerät 12 implementiert.

Der Regler 3 hat ein p-Verhalten und ist derart ausgelegt, dass eine Regelabweichung Δδ stabil ausgeregelt werden kann. Der Regler 3 umfasst hier eine Kennlinie, die in Abhängigkeit von der Regelabweichung ein Führungsmoment (Signal M_{E}) erzeugt, das dem Lenksteller 4 zugeführt wird. Der Lenksteller 4, der einen Regler 4a und den eigentlichen Aktuator 4b umfasst, setzt das Moment M_{E} je nach Regelcharakteristik in ein Stellmoment M_{A} um, das dann auf die Lenkung ausgeübt wird. Das Stellmoment M_{A} überlagert sich mit dem vom Fahrer 1 am Lenkrad ausgeübten Moment M_{F}. Dies ist durch einen weiteren Addierknoten 5 dargestellt. Das Übertragungsverhalten der Lenkung wird schließlich durch einen Block 6 repräsentiert.

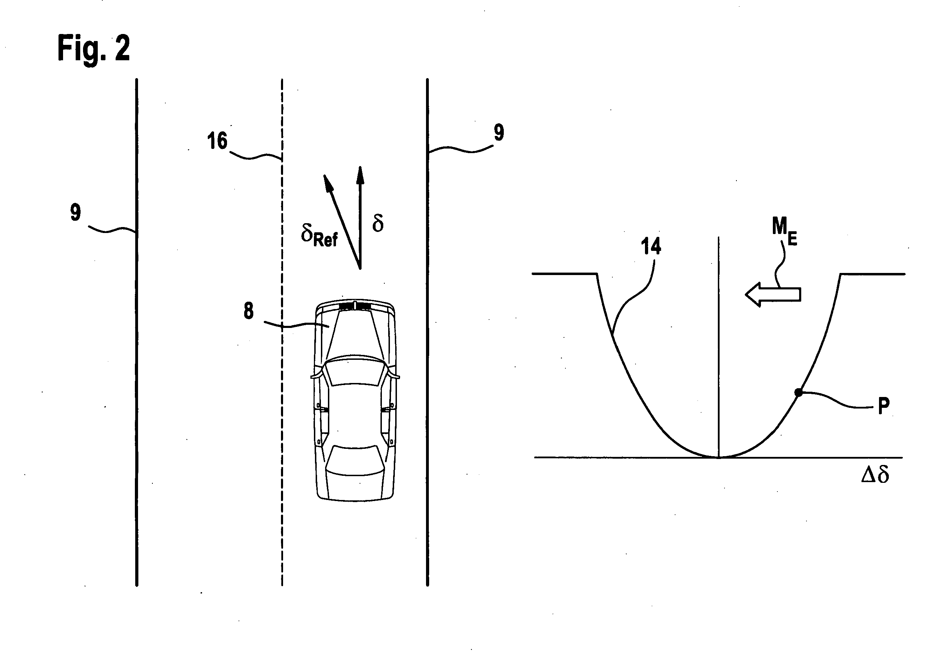

Figur 2 zeigt eine Fahrsituation, in der das Fahrzeug 8 in seiner Fahrspur 9 geradeaus fährt und dabei von der Fahrspur-Mitte 16 abweicht. Das LKS-System berechnet in diesem Fall einen Referenz-Lenkwinkel δ_{Ref}, der das Fahrzeug 8 auf die Spurmitte 16 zurückbringen soll. Die Regelung befindet sich in diesem Zustand in einem Punkt P der rechts dargestellten Regler-Kennlinie 14 und erzeugt ein entsprechendes Führungsmoment M_{E} in Richtung der Spurmitte 16.

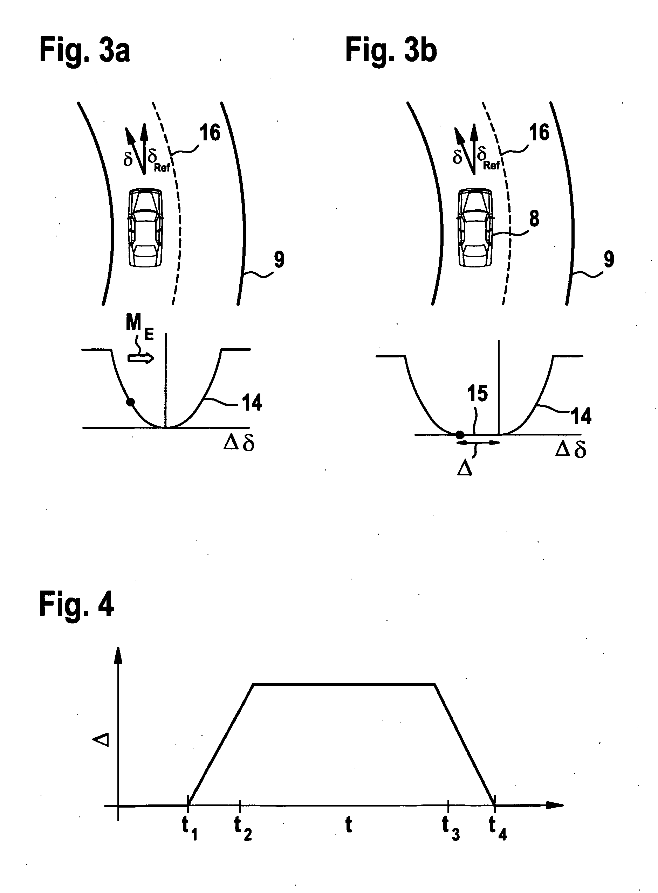

Bekannte LKS-Systeme sind üblicherweise derart ausgelegt, dass das Fahrzeug 8 auf einer vorgegebenen Soll-Bewegungsbahn, in der Regel der Fahrspur-Mitte, geführt wird. Ein Nachteil dieser Systeme besteht jedoch darin, dass viele Fahrer dazu neigen, Kurven nicht mittig, sondern nahe dem Kurveninneren zu durchfahren, also Kurven zu schneiden. Da bekannte LKS-Systeme grundsätzlich auf das Führen eines Fahrzeuges in der Fahrspur-Mitte ausgelegt sind, kommt es beim Kurvenschneiden zu einer Abweichung zwischen dem vom Fahrer gewünschten und dem Referenz-Lenkwinkel und damit zu einem korrigierenden Lenkeingriff des LKS-Systems zur Spurmitte hin. Dies ist in Figur 3a schematisch dargestellt. Das vom LKS-System ausgeübte Führungsmoment in Richtung Spurmitte 16 ist mit M_{E} bezeichnet.

Einen solchen Lenkeingriff des LKS-Systems empfindet ein Fahrer, wenn er eine Kurve bewusst schneidet, als unangenehm und störend.
Ein LKS-system, das eine kurrenfahrt berücksichtigt, ist aus der WO 03091813 bekannt.
Es ist daher die Aufgabe der vorliegenden Erfindung, ein LKS-System zu schaffen, das das Schneiden von Kurven zulässt, ohne regelnd oder steuernd in den Fahrbetrieb einzugreifen.

Gelöst wird diese Aufgabe gemäß der Erfindung durch die im Patentanspruch 1 angegebenen Merkmale. Weitere Ausgestaltungen der Erfindung sind Gegenstand von Unteransprüchen.

Ein wesentlicher Gedanke der Erfindung besteht darin, das Führungsverhalten des LKS-Systems während einer Kurvenfahrt zu modifizieren, so dass beim Schneiden der Kurve keine oder nur sehr geringe künstliche Lenkkräfte auf die Lenkung ausgeübt werden. Dagegen werden bei einer Abweichung der Bewegungsbahn in Richtung der Kurvenaußenseite weiterhin Lenkkräfte aufgeprägt, die den Fahrer auf das Abkommen von der Fahrspur hinweisen bzw. das Fahrzeug automatisch auf die Soll-Bewegungsbahn zurückführen. Das LKS-System unterscheidet also zwischen einer Abweichung in Richtung der Kurveninnenseite und einer Abweichung in Richtung der Kurvenaußenseite. Das Führungsverhalten kann somit auch als asymmetrisch bezeichnet werden.

Gemäß einer bevorzugten Ausführungsform der Erfindung wird eine Steuer- bzw. Regler-Kennlinie im Falle einer Kurvenfahrt asymmetrisch aufgeweitet, wobei eine Totzone für die Regelabweichung geschaffen wird, in der kein oder ein geringes Führungsmoment erzeugt wird. Das heißt, beim Schneiden einer Kurve werden keine bzw. nur geringe Lenkkräfte auf die Lenkung aufgeprägt, solange sich die Regelabweichung innerhalb der Totzone befindet. Wird die Regelabweichung dagegen größer als die Totzone (weil der Fahrer die Kurve zu stark schneidet) greift das LkS-System wieder regelnd ein. Das Regelverhalten bleibt bei einem Abweichen des Fahrzeugs in Richtung der Kurvenaußenseite vorzugsweise unverändert wie bei Geradeausfahrt.

Die Größe der Totzone ist vorzugsweise abhängig von wenigstens einer weiteren Fahr-Zustandsgröße, insbesondere der Fahrgeschwindigkeit und/oder der Gierrate und/oder der Querbeschleunigung und/oder dem Kurvenverlauf, und ist vorzugsweise so groß gewählt, dass der Fahrer einerseits genug Spielraum hat, die Kurve zu schneiden, und andererseits am Verlassen der Fahrspur zum Kurveninneren hin gehindert wird.

Das Regelverhalten des LKS-Systems wird vorzugsweise bereits vor dem Einfahren des Fahrzeuges in eine Kurve modifiziert. Mit der Anfahrt auf die Kurve wächst die Größe der Totzone vorzugsweise stetig an, erreicht im Scheitelpunkt der Kurve ihren Maximalwert und fällt beim Verlassen der Kurve wieder auf den Ausgangswert ab. Die Totzone bzw. das Führungsverhalten der LKS-Regelung wird vorzugsweise nicht sprungartig modifiziert.

Die Kennlinie bildet vorzugsweise die Abweichung einer Zustandsgröße, wie z. B. eine Lenkwinkelabweichung, auf eine Führungsgröße, wie z. B. ein Lenkmoment, ab. Das Führungsverhalten des LKS-Systems kann durch Auslegung der Steuer- bzw. Regler-Kennlinie zwischen halbautomatischer (unterstützender) und vollautomatischer Führung variiert werden.

Die Steuer- bzw. Regler-Kennlinie hat vorzugsweise ein p-Verhalten und insbesondere kein I-Verhalten.

Die Steuer- bzw. Regler-Kennlinie ist bei Geradeausfahrt vorzugsweise symmetrisch (punktsymmetrisch) und wird bei Einfahrt in eine Kurve in eine asymmetrische Kennlinie modifiziert.

Neben der vorstehend erwähnten Möglichkeit der Änderung der Steuer- bzw. Regler-Kennlinie bei Kurvenfahrt könnte alternativ dazu beispielsweise auch der Referenz-Lenkwinkel δ_{Ref} bei Kurvenfahrt unterschiedlich berechnet werden oder die Regelabweichung modifiziert werden.

Die Funktionen sind vorzugsweise als Software in einem Steuergerät hinterlegt.

Die Erfindung wird nachstehend anhand der beigefügten Zeichnungen beispielhaft näher erläutert. Es zeigen:
Figur 1 eine schematische Darstellung eines LKS-Systems mit vollautomatischer Führung;
Figur 2 das Führungsverhalten eines bekannten LKS-Systems bei Abweichung des Fahrzeugs von einer Soll-Bewegungsbahn;
Figur 3a das Führungsverhalten eines bekannten LKS-Systems beim Kurvenschneiden;
Figur 3b das Führungsverhalten eines LKS-Systems gemäß der Erfindung beim Kurvenschneiden; und
Figur 4 den Verlauf der Größe einer Totzone beim Durchfahren einer Kurve.

Bezüglich der Erläuterung der Figuren 1, 2 und 3a wird auf die Beschreibungseinleitung verwiesen.

Figur 3b zeigt das Führungsverhalten eines LKS-Systems gemäß der Erfindung während einer Kurvenfahrt, bei der der Fahrer die Kurve schneidet. Wie zu erkennen ist, fährt das Fahrzeug 8 außerhalb der Spurmitte (entspricht hier der Soll-Bewegungsbahn) zu weit im Kurveninneren. Dies führt zu einer Abweichung zwischen dem vom Fahrer gewählten Lenkwinkel und dem vom Referenzmodell 13 berechneten Referenz-Lenkwinkel. Im Unterschied zum bekannten LKS-System in Figur 3a kommt es jedoch hier nicht zu einem korrigierenden Lenkeingriff. Dies wird dadurch erreicht, dass die Regler-Kennlinie 14 asymmetrisch aufgeweitet und eine Totzone 15 geschaffen wird, in der trotz einer Regelabweichung Δδ kein Führungsmoment M_{E} erzeugt wird. Innerhalb der Totzone 15 ist die Kennlinie 14 und damit das Führungsmoment M_{E} gleich Null oder nimmt nur sehr geringe Werte an. Dadurch hat der Fahrer ausreichend Spielraum, die Kurve zu schneiden, ohne dass das LKS-System regelnd eingreift.

Die Größe der Totzone 15 ist vorzugsweise abhängig von verschiedenen Fahrzustands-Parametern, insbesondere der Fahrgeschwindigkeit, der Gierrate, der Querbeschleunigung und/oder dem Kurvenverlauf der Fahrbahn. Sie ist so groß gewählt, dass der Fahrer zwar die Kurve schneiden kann, aber weiterhin am Verlassen der Fahrspur in Richtung der Kurveninnenseite gehindert wird.

Figur 4 zeigt den Aufbau und Abbau der Totzone 15 von der Einfahrt in eine Kurve bis zur Ausfahrt aus der Kurve über der Zeit t. Wie zu erkennen ist, wächst die Größe der Totzone 15 bereits vor der Einfahrt in die Kurve an (Zeitpunkt t₁) und erreicht im Scheitelpunkt der Kurve (Zeitpunkt t₂) ihren Maximalwert. Der Maximalwert wird so lange beibehalten, bis das Fahrzeug 8 wieder aus der Kurve ausfährt (Zeitpunkt t₃) und wird dann stetig gegen Null abgebaut. Bei Geradeaus-Fahrt entspricht die Kennlinie 14 dann wiederum der aus Figur 2.

Die erfindungsgemäße Modifikation des Führungsverhaltens bei Kurvenfahrt ist sowohl bei halbautomatischen Systemen, die dem Fahrer nur Lenkhinweise geben, wie vorstehend beschrieben, als auch bei vollautomatischen Systemen, durchführbar.

### Bezugszeichenliste

- 1: Fahrer
- 2: Addierknoten
- 3: Regler
- 4: Stellglied mit Momentenregelkreis
- 4a: Regler des Stellglieds 4
- 4b: Aktuator des Stellglieds 4
- 5: Addierknoten
- 6: Lenkung
- 7: Fahrspurerkennungssystem
- 8: Fahrzeug
- 9: Seitenmarkierung
- 10: Fahrspur
- 11: Regelkreis
- 12: Steuergerät
- 13: Referenzmodell
- 14: Kennlinie
- 15: Totzone
- 16: Spurmitte

## Patentansprüche

1. Vorrichtung zum Halten eines Fahrzeuges (8) in seiner Fahrspur (10), die bei einer Abweichung der Bewegungsbahn des Fahrzeugs (8) von einer Soll-Bewegungsbahn (16) mittels eines Lenkstellers (4) ein Lenkmoment (M_{E}) auf die Lenkung (6) des Fahrzeugs (8) aufprägt, wobei das Führungsverhalten der Vorrichtung im Falle einer Kurvenfahrt modifiziert wird, **dadurch gekennzeichnet dass** bei einer Abweichung der tatsächlichen Bewegungsbahn des Fahrzeuges (8) von der Soll-Bewegungsbahn (16) in Richtung der Kurveninnenseite geringere Lenkkräfte auf die Lenkung (6) aufgeprägt werden als bei einer entsprechenden Abweichung in Richtung der Kurvenaußenseite.

2. Vorrichtung nach Anspruch 1, **dadurch gekennzeichnet, dass** ein Referenzmodell (13), das von einem Fahrspurerkennungssystem (7) geometrische Daten bezüglich der Position des Fahrzeuges (8) in der Fahrspur (10) sowie den Fahrspurverlauf betreffende Daten erhält und daraus eine Sollgröße (δ_{Ref}) berechnet, und eine Steuer- oder Regeleinrichtung (3) vorgesehen sind, die in Abhängigkeit von einer Differenz (Δδ) zwischen der Sollgröße (δ_{Ref}) und einer entsprechenden Zustandsgröße (δ) ein Steuersignal (M_{E}) erzeugt, das mit Hilfe des Stellglieds (4) auf die Lenkung des Fahrzeuges (8) aufgeprägt wird, um das Fahrzeug (8) auf die Soll-Bewegungsbahn (16) zu führen.

3. Vorrichtung nach Anspruch 1, **dadurch gekennzeichnet, dass** eine Steuer- oder Regeleinrichtung (3) vorgesehen ist, die eine Kennlinie (14) umfasst, die im Falle einer Kurvenfahrt asymmetrisch aufgeweitet wird, wobei eine Totzone (15) für die Differenz (Δδ) vorgegeben wird, in der nur geringe oder keine Lenkkräfte auf die Lenkung (6) aufgeprägt werden.

4. Vorrichtung nach Anspruch 3, **dadurch gekennzeichnet, dass** die Größe der Totzone (15) abhängig von der Fahrgeschwindigkeit, der Gierrate, der Querbeschleunigung und/oder dem Kurvenverlauf ist.

5. Vorrichtung nach Anspruch 1 oder 2, **dadurch gekennzeichnet, dass** das Führungsverhalten bereits kurz vor dem Einfahren in eine Kurve modifiziert wird.

6. Vorrichtung nach einem der vorhergehenden Ansprüche, **dadurch gekennzeichnet, dass** sie einen Lenkwinkel-Regelkreis (11) mit einem Regler (3) umfasst.

7. Vorrichtung nach Anspruch 3, **dadurch gekennzeichnet, dass** die Kennlinie (14) bei Geradeaus-Fahrt eine symmetrische Kennlinie ist, die im Falle einer Kurvenfahrt zu einer asymmetrischen Kennlinie modifiziert wird.

8. Vorrichtung nach Anspruch 3, **dadurch gekennzeichnet, dass** die Kennlinie (14) als eine Funktion in einem Steuergerät hinterlegt ist.

9. Vorrichtung nach Anspruch 1, **dadurch gekennzeichnet, dass** im Falle einer Kurvenfahrt ein modifizierter Referenz-Lenkwinkel oder eine modifizierte Regelabweichung berechnet wird, um ein Kurvenschneiden zuzulassen.

## Claims

1. Device for keeping a vehicle (8) in its lane (10), which applies a steering torque (M_{E}) to the steering system (6) of the vehicle (8) by means of a steering actuator (4) when there is a deviation of the movement path of the vehicle (8) from a reference movement path (16), wherein the guiding behaviour of the device is modified in the case of cornering, **characterized in that**, when there is a deviation of the actual movement path of the vehicle (8) from the reference movement path (16) in the direction of the inside of a bend, smaller steering forces are applied to the steering system (6) than when there is a corresponding deviation in the direction of the outside of the bend.

2. Device according to Claim 1, **characterized in that** a reference model (13) which receives geometric data relating to the position of the vehicle (8) in the lane (10) from a lane keeping detection system (7), and data relating to the course of the lane, and calculates therefrom a reference variable (δ_{Ref}), and an open-loop or closed-loop control device (3) are provided, which control device generates a control signal (M_{E}) as a function of a difference (Δδ) between the reference variable (δ_{Ref}) and a corresponding state variable (δ), which control signal (M_{E}) is applied to the steering system of the vehicle (8) using the actuator (4) in order to guide the vehicle (8) onto the reference movement path (16).

3. Device according to Claim 1, **characterized in that** an open-loop or closed-loop control device (3) is provided which comprises a characteristic curve (14) which is widened asymmetrically in the case of cornering, wherein a dead zone (15) is predefined for the difference (Δδ), in which dead zone (15) only small steering forces, or no steering forces, are applied to the steering system (6).

4. Device according to Claim 3, **characterized in that** the size of the dead zone (15) is dependent on the velocity, the yaw rate, the lateral acceleration and/or the profile of the bend.

5. Device according to Claim 1 or 2, **characterized in that** the guide behaviour is already modified just before the vehicle enters a bend.

6. Device according to one of the preceding claims, **characterized in that** said device comprises a steering angle control circuit (11) with a controller (3).

7. Device according to Claim 3, **characterized in that** in the case of straight-ahead travel the characteristic curve (14) is a symmetrical characteristic curve which is modified into an asymmetrical characteristic curve in the case of cornering.

8. Device according to Claim 3, **characterized in that** the characteristic curve (14) is stored as a function in a control device.

9. Device according to Claim 1, **characterized in that**, in the case of cornering, a modified reference steering angle or a modified control error is calculated in order to permit cutting of a corner.

## Revendications

1. Dispositif de maintien d'un véhicule (8) dans sa trajectoire de déplacement (10), qui au cas où la trajectoire de déplacement du véhicule (8) s'écarte d'une trajectoire de déplacement de consigne (16) exerce au moyen d'un ajusteur de direction (4) un couple (M_{E}) de changement de direction sur la direction (6) du véhicule (8), le comportement de guidage du dispositif étant modifié en cas de déplacement dans un virage, **caractérisé en ce qu'**en cas d'écart entre la trajectoire effective de déplacement du véhicule (8) et la trajectoire de déplacement de consigne (16) en direction de l'intérieur du virage, la force de changement de direction exercée sur la direction (6) est moins élevée qu'en cas d'écart correspondant en direction de l'extérieur du virage.

2. Dispositif selon la revendication 1, **caractérisé en ce qu'**un modèle de référence (13) reçoit d'un système (7) de détection de trajectoire de déplacement des données géométriques concernant la position du véhicule (8) dans la trajectoire de déplacement (10) ainsi que des données qui concernent l'évolution de la trajectoire de déplacement et calcule à partir de là une grandeur de consigne (δ_{Ref}), et **en ce qu'**il présente un dispositif (3) de commande ou de régulation qui forme en fonction de la différence (Δδ) entre la grandeur de consigne (δ_{Ref}) et une grandeur d'état correspondante (δ) un signal de commande (M_{E}) qui est appliqué à l'aide de l'organe de commande (4) sur la direction du véhicule (8) pour guider le véhicule (8) sur la trajectoire de déplacement de consigne (16).

3. Dispositif selon la revendication 1, **caractérisé en ce qu'**il présente un dispositif (3) de commande ou de régulation qui comprend une ligne caractéristique (14) qui s'évase asymétriquement en cas de déplacement dans un virage, une zone morte (15) dans laquelle aucune force de direction ou une faible force de direction sont appliquées sur la direction (6) étant prédéterminée pour la différence (Δδ).

4. Dispositif selon la revendication 3, **caractérisé en ce que** la taille de la zone morte (15) dépend de la vitesse de déplacement, de la vitesse de lacet, de l'accélération transversale et/ou de la forme du virage.

5. Dispositif selon les revendications 1 ou 2,
**caractérisé en ce que** le comportement de conduite est modifié peu avant l'entrée dans un virage.

6. Dispositif selon l'une des revendications précédentes, **caractérisé en ce qu'**il comprend une boucle (11) de régulation de l'angle de direction dotée d'un régulateur (3).

7. Dispositif selon la revendication 3, **caractérisé en ce qu'**en cas de déplacement en ligne droite, la ligne caractéristique (14) est une ligne caractéristique symétrique qui est transformée en une ligne caractéristique asymétrique en cas de déplacement dans un virage.

8. Dispositif selon la revendication 3, **caractérisé en ce que** la ligne caractéristique (14) est conservée à titre de fonction dans un appareil de commande.

9. Dispositif selon la revendication 1, **caractérisé en ce qu'**en cas de déplacement dans un virage, un angle modifié de référence de direction ou un écart modifié de régulation sont calculés pour permettre de couper le virage.
